# EUROPÄISCHE PATENTSCHRIFT

(11) **EP 3 314 339 B1**
(45) Veröffentlichungstag und Bekanntmachung des Hinweises auf die Patenterteilung: **24.07.2019**
(21) Anmeldenummer: 16727526.2
(22) Anmeldetag: 08.06.2016
(51) Int. Cl.: G05B 19/042, G06F 9/445, G06F 21/57, G06F 21/85, G06F 21/52, H04L 29/06, H04W 12/08, G06F 8/654

(54) **VERFAHREN, SERVER, FIREWALL, STEUERGERÄT, UND SYSTEM ZUR PROGRAMMIERUNG EINES STEUERGERÄTS EINES FAHRZEUGS**
METHOD, SERVER, FIREWALL, CONTROL DEVICE, AND SYSTEM FOR PROGRAMMING A CONTROL DEVICE OF A VEHICLE
PROCÉDÉ, SERVEUR, PARE-FEU, APPAREIL DE COMMANDE ET SYSTÈME POUR PROGRAMMER UN CALCULATEUR D'UN VÉHICULE

(30) Priorität: 23.06.2015 DE 102015211540
(43) Veröffentlichungstag der Anmeldung: 02.05.2018
(73) Patentinhaber: Bayerische Motoren Werke Aktiengesellschaft, 80809 München (DE)
(72) Erfinder: ANTON, Markus, 80809 München (DE)
(86) Internationale Anmeldenummer: PCT/EP2016/063001
(87) Internationale Veröffentlichungsnummer: WO 2016/206977

(56) Entgegenhaltungen:
- WO-A1-2010/054920
- WO-A1-2011/121076
- DE-A1- 10 357 032
- DE-A1-102012 220 132
- DE-A1-102013 202 322

## Beschreibung

Die Erfindung betrifft ein Verfahren, einen Server, eine Firewall, ein Steuergerät und ein System zur Programmierung eines Steuergeräts eines Fahrzeugs.

Derzeit werden häufig zu programmierende Fahrzeugsoftware bzw. Fahrzeugsoftwarestände unverschlüsselt an die jeweiligen Steuergeräte eines Fahrzeugs übertragen. Für die Übertragung kann zwar der Übertragungskanal verschlüsselt werden. Die Fahrzeugsoftware liegt jedoch meist unverschlüsselt auf dem Rechner des Senders und/oder des Empfängers vor. Beispielsweise können für Servicezwecke die unverschlüsselten Fahrzeugsoftwarestände von Rechnern des Herstellers eines Fahrzeugs an Rechner von Reparaturwerkstädten verteilt werden. Auf den Rechnern von Reparaturwerkstädten und/oder den Rechnern des Herstellers eines Fahrzeugs können somit die Fahrzeugsoftwarestände unverschlüsselt vorliegen. Die unverschlüsselten Fahrzeugsoftwarestände können beispielsweise disassembliert werden, um aus dem Binärcode der Fahrzeugsoftware den ursprünglichen Quellcode wieder herzustellen. Dadurch kann die Wirkungsweise von Steuergeräten und/oder die Sicherheitsarchitektur der Software von Fahrzeugen analysiert werden. Bei einer Übertragung verschlüsselter Fahrzeugsoftwarestände kann es notwendig sein, dass der Schlüssel zur Entschlüsselung des verschlüsselten Fahrzeugsoftwarestands zwischen dem Sender und dem Empfänger, z.B. zwischen einem Rechner des Fahrzeugherstellers und einem Rechner der Reparaturwerkstatt, übertragen wird. Wenn Datendiebe in den Besitz des Schlüssels auf dem Rechner des Senders und/oder auf dem Rechner des Empfängers zusammen mit den dazugehörigen verschlüsselten Fahrzeugsoftwareständen kommen, kann eine unbefugte Entschlüsselung durch einen nichtvertrauenswürdigen Dritten möglich sein.

Der bisherige Stand der Technik umfasst die Druckschriften DE 10357032 A1, DE 102013202322 A1, DE 102012220132 A1, WO 2010/054920 A1 sowie WO 2011/121076 A1.

Es ist eine Aufgabe der Erfindung, die Sicherheit der Programmierung von Steuergeräten eines Fahrzeugs zu verbessern. Insbesondere ist es eine Aufgabe der Erfindung die Sicherheit beim Schreiben von Fahrzeugsoftwareständen und/oder Schlüsseln in ein Steuergerät zu verbessern.

Gelöst wird diese Aufgabe durch die Merkmale der unabhängigen Patentansprüche. Vorteilhafte Ausgestaltungen sind in den Unteransprüchen gekennzeichnet.

Die Erfindung zeichnet sich aus durch ein Verfahren zum Programmieren eines Steuergeräts eines Fahrzeugs. Das Verfahren umfasst das Schreiben eines ersten Softwaremoduls über eine erste Schnittstelle in das Steuergerät. Das Verfahren umfasst ferner das Sperren der ersten Schnittstelle des Steuergeräts. Nach dem Sperren der Schnittstelle wird ein Schlüssels über eine zweite Schnittstelle in einen gesicherten Speicherbereich des Steuergeräts gespeichert und eine verschlüsselte Fahrzeugsoftware über die zweite Schnittstelle in das Steuergerät geschrieben. Die verschlüsselte Fahrzeugsoftware wird durch das erste Softwaremodul unter Verwendung des geschrieben Schlüssels entschlüsselt. Die entschlüsselte Fahrzeugsoftware wird in einem Speicherbereich des Steuergeräts gespeichert. Schließlich wird ein Leseschutz für den Speicherbereich der entschlüsselten Fahrzeugsoftware installiert.

Durch das Sperren der ersten Schnittstelle des Steuergeräts kann ein Auslesen des Schlüssels und der unverschlüsselten Fahrzeugsoftware über die erste Schnittstelle verhindert werden. Ferner kann durch die Installation eines Leseschutzes das Auslesen der unverschlüsselten Fahrzeugsoftware über weitere Schnittstellen des Steuergeräts verhindert werden. Dadurch kann die Sicherheit des Steuergeräts erhöht werden. Ferner kann das Schreiben der Fahrzeugsoftware bzw. des Fahrzeugsoftwarestands verschlüsselt erfolgen, so dass ein nichtvertrauenswürdiger Dritter keine Möglichkeit hat, die verschlüsselte Fahrzeugsoftware zu entschlüsseln und/oder den Inhalt der Fahrzeugsoftware zu disassemblieren.

Gemäß einer vorteilhaften Ausgestaltung kann das Sperren der ersten Schnittstelle das Übermitteln eines Befehls zum Sperren der ersten Schnittstelle des Steuergeräts von dem Server an das Steuergerät und das Ausführen des Befehls zum Sperren der ersten Schnittstelle auf dem Steuergerät umfassen. Durch ein Befehl-gesteuertes Sperren der ersten Schnittstelle kann die erste Schnittstelle, z.B. eine Diagnoseschnittstelle, des Steuergeräts einfach gesperrt werden. Es ist kein weiteres Programm und/oder keine weitere Funktion notwendig sein, um die erste Schnittstelle zu sperren. Ferner kann das Sperren aktiv vorgenommen werden, so dass die Steuerung des Sperrens von außerhalb des Steuergeräts angestoßen werden kann. Dadurch kann die Steuerung der Programmierung des Steuergeräts vereinfacht werden.

Gemäß einer weiteren vorteilhaften Ausgestaltung kann der Befehl zum Sperren der ersten Schnittstelle von dem Server an eine Firewall übermittelt werden und der Befehl zum Sperren der ersten Schnittstelle von der Firewall über die zweite Schnittstelle der Steuereinheit an die Steuereinheit übermittelt werden. Durch die Übermittelung des Befehls zum Sperren der Schnittstelle über eine Firewall kann die Steuerung des Sperrens der ersten Schnittstelle des Steuergeräts verbessert werden. Durch den Einsatz einer Firewall kann eingeschränkt werden, welche Einheit bzw. welcher Rechner den Befehl zum Sperren der ersten Schnittstelle übertragen darf. Regeln in der Firewall können beispielsweise festlegen, welcher Rechner den Befehl an die Firewall übermitteln kann. Somit kann effizient das Sperren der ersten Schnittstelle überwacht und gesteuert werden. Der Befehl zum Sperren der ersten Schnittstelle kann somit über eine gesicherte Schnittstelle zwischen der Firewall und dem Steuergerät erfolgen, was die Sicherheit der Programmierung des Steuergeräts weiter erhöht.

Gemäß einer weiteren vorteilhaften Ausgestaltung kann das Verfahren ein Übermitteln eines Befehls zum Schreiben eines Schlüssels von dem Server an die Firewall, und ein Ausführen des Befehls zum Schreiben des Schlüssels in der Firewall umfassen. Das Ausführen des Befehls zum Schreiben des Schlüssels in der Firewall kann ferner das Sperren der Schnittstelle zwischen der Firewall und dem Server, das Lesen des Schlüssels aus einem Speicher der Firewall, das Übermitteln des Schlüssels über die zweite Schnittstelle des Steuergeräts von der Firewall an das Steuergerät, und das Freigeben der Schnittstelle zwischen der Firewall und dem Server umfassen. Hiermit kann die Sicherheit beim Schreiben des Schlüssels von der Firewall in das Steuergerät erhöht werden. Durch das Sperren der Schnittstelle zwischen der Firewall und dem Server können mögliche Angriffe durch den Server auf die Firewall, um beispielsweise den Schlüssel aus der Firewall auszulesen, verhindert werden.

Gemäß einer weiteren vorteilhaften Ausgestaltung kann das Übermitteln des Schlüssels ein Übermitteln einer Anfrage an das Steuergerät, ob die erste Schnittstelle gesperrt ist, und das Empfangen einer Antwort des Steuergeräts, ob die erste Schnittstelle gesperrt ist, umfassen. Der Schlüssel kann über die zweite Schnittstelle des Steuergeräts übermittelt werden, wenn die Antwort eine Bestätigung umfasst, dass die erste Schnittstelle des Steuergeräts gesperrt ist. Hiermit kann sichergestellt werden, dass das Steuergerät in einem Zustand ist, der das Auslesen oder Verändern des Schlüssels aus dem Steuergerät über die erste Schnittstelle des Steuergeräts verhindert. Die Sicherheit beim Schreiben des Schlüssels kann somit erhöht werden.

Gemäß einer weiteren vorteilhaften Ausgestaltung kann das Verfahren ein Übermitteln der verschlüsselten Fahrzeugsoftware von dem Server an die Firewall, ein Sperren der Schnittstelle zwischen der Firewall und dem Server, und ein Übermitteln der verschlüsselten Fahrzeugsoftware von der Firewall an das Steuergerät umfassen. Vorteilhafterweise kann die verschlüsselte Fahrzeugsoftware nur dann von der Firewall auf das Steuergerät übertragen werden, wenn die Schnittstelle zwischen dem Server und der Firewall gesperrt ist. Dadurch kann die Sicherheit des Verfahrens weiter erhöht werden. Die Verteilung der verschlüsselten Fahrzeugsoftware kann unabhängig von der Verteilung des Schlüssels erfolgen. Die Firewall stellt sicher, dass eine Übertragung des Schlüssels von dem Server an die Firewall entfällt. Nur die verschlüsselte Fahrzeugsoftware muss vom Server an die Firewall übertragen werden.

Die Erfindung zeichnet sich ferner aus durch einen Server zum Programmieren eines Steuerungsgeräts, wobei der Server dazu ausgebildet ist, ein erstes Softwaremodul zu empfangen, eine verschlüsselte Fahrzeugsoftware zu empfangen, das erste Softwaremodul über eine erste Schnittstelle an ein Steuergerät zu übermitteln, einen Befehls zum Sperren der ersten Schnittstelle an das Steuergerät zu übermitteln, die verschlüsselte Fahrzeugsoftware an die Firewall zu übermitteln, und einen Befehl zum Schreiben eines Schlüssels an die Firewall zu übermitteln.

Die Erfindung zeichnet sich ferner aus durch eine Firewall zur Programmierung eines Steuerungsgeräts, wobei die Firewall dazu ausgebildet ist einen Befehl zum Sperren einer ersten Schnittstelle eines Steuergeräts zu empfangen, den Befehl zum Sperren der ersten Schnittstelle an das Steuergerät weiterzuleiten, eine verschlüsselte Fahrzeugsoftware zu empfangen, einen Befehl zum Schreiben eines Schlüssels in das Steuergerät zu empfangen, den Schlüssel über eine zweite Schnittstelle in einen gesicherten Speicherbereich des Steuergeräts zu schreiben, und die verschlüsselte Fahrzeugsoftware über die zweite Schnittstelle an das Steuergerät zu übermitteln.

Die Erfindung zeichnet sich ferner aus durch ein Steuergerät, wobei das Steuergerät eine erste Schnittstelle umfasst, die dazu ausgebildet ist, ein erstes Softwaremodul zu empfangen. Das Steuergerät umfasst weiterhin ein erstes Speicherelement, das dazu ausgebildet ist, das erste Softwaremodule zu speichern, ein zweites Speicherelement, das dazu ausgebildet ist, eine unverschlüsselte Fahrzeugsoftware zu speichern, und ein drittes Speicherelement, das dazu ausgebildet ist, einen Schlüssel zu speichern. Das erste, zweite, und/oder dritte Speicherelement können im Rahmen dieses Dokuments Speicherbereiche eines oder mehrerer nicht-flüchtigen Speicher oder Speicherelemente eines Steuergeräts sein. Das Steuergerät umfasst ferner einen Prozessor und Instruktionen zur Ausführung auf dem Prozessor, die, wenn ausgeführt auf dem Prozessor, das oben beschriebene Verfahren ausführen.

Die Erfindung zeichnet sich ferner aus durch ein System zum Programmieren eines Steuergeräts, wobei das System einen oben beschriebenen Server, eine oben beschriebene Firewall, und ein oben beschriebenes Steuergerät umfasst.

Weitere Merkmale der Erfindung ergeben sich aus den Ansprüchen, den Figuren und der Figurenbeschreibung. Alle vorstehend in der Beschreibung genannten Merkmale und Merkmalkombinationen sowie die nachfolgend in der Figurenbeschreibung genannten und/oder in den Figuren allein gezeigten Merkmale und Merkmalkombinationen sind nicht nur in der jeweils angegebenen Kombination, sondern auch in anderen Kombinationen oder aber in Alleinstellung verwendbar.

Die Erfindung beruht auf den nachfolgend dargelegten Überlegungen:
Fahrzeugsoftwarestände werden sofort bei der Erstellung verschlüsselt werden. Die Verschlüsselung kann beispielsweise durch bekannte symmetrische oder asymmetrische Verschlüsselungsverfahren erfolgen. Die verschlüsselten Fahrzeugsoftwarestände können in verschlüsselter Form auf einem Produktionsserver eines Fahrzeugherstellers und/oder an Server von Reparaturwerkstätten übertragen bzw. übermittelt werden. Bei einer Produktion eines Steuergeräts programmiert der Produktionsserver lediglich einen Bootloader bzw. ein Startprogramm in das Steuergerät. Die Programmierung kann beispielsweise über eine Diagnoseschnittstelle bzw. eine Debug-Schnittstelle erfolgen. Vorzugsweise kann die Programmierung über die standardisierte Diagnoseschnittstelle, z.B. die standardisierte Diagnoseschnittstelle der Joint Test Action Group JTAG. Vorzugsweise kann der Produktionsserver das Startprogramm direkt in das Steuergerät programmieren.

Das Startprogramm bzw. der Bootloader beinhaltet im Allgemeinen keine geheimen oder kritischen Daten. Die Diagnoseschnittstelle kann danach geschlossen werden. Der Produktionsserver kann dann nicht mehr direkt mit dem zu programmierenden Steuergerät sondern nur noch mit einer Firewall kommunizieren. Die Firewall kann die verschlüsselten, zu programmierenden Daten, z.B. verschlüsselte Fahrzeugsoftwarestände, empfangen. Nach Empfang der verschlüsselten, zu programmierenden Daten kann die Schnittstelle zwischen dem Produktionsrechner und der Firewall geschlossen werden. Der Schlüssel zur Entschlüsselung der verschlüsselten, zu programmierenden Daten ist vorzugsweise nicht auf dem Produktionsserver, sondern nur in der Firewall vorhanden bzw. gespeichert. Die Firewall ist so konfiguriert, dass sie nach außen hin, d.h. bezüglich der Schnittstelle zum Produktionsserver hin, lesegeschützt ist. Die lesegeschützte Firewall kann über eine geschützte Schnittstelle mit dem zu programmierenden Steuergerät kommunizieren. Die Firewall kann zunächst einen geheimen Entschlüsselungsschlüssel in das zu programmierende Steuergerät übertragen. Im Anschluss daran kann die zu programmierende Fahrzeugsoftware auf das Steuergerät übertragen werden. Die Entschlüsselung der verschlüsselten Fahrzeugsoftware kann von dem Steuergerät selbst ausgeführt werden. Durch eine Installierung eines Leseschutzes auf dem Steuergerät kann die nicht mehr verschlüsselte Fahrzeugsoftware vor unbefugtem Zugriff Dritter geschützt werden.

Fahrzeugsoftwarestände können somit nicht mehr disassembliert werden. Eine Analysemöglichkeit der Fahrzeugsoftware durch Dritte ist somit nicht mehr möglich. Der unbefugte Zugriff auf Steuer- und/oder Sicherheitscode im Fahrzeug kann somit ausgeschlossen werden, da die verschlüsselte Fahrzeugsoftware und der dazugehörige Schlüssel nie gemeinsam aus einem Rechner bzw. Server vorkommen. Durch die Firewall zwischen dem Produktionsserver und dem Steuergerät bei einer Produktionsanlage kann ferner ein Ausspähen der Entschlüsselungsschlüssel verhindert werden.

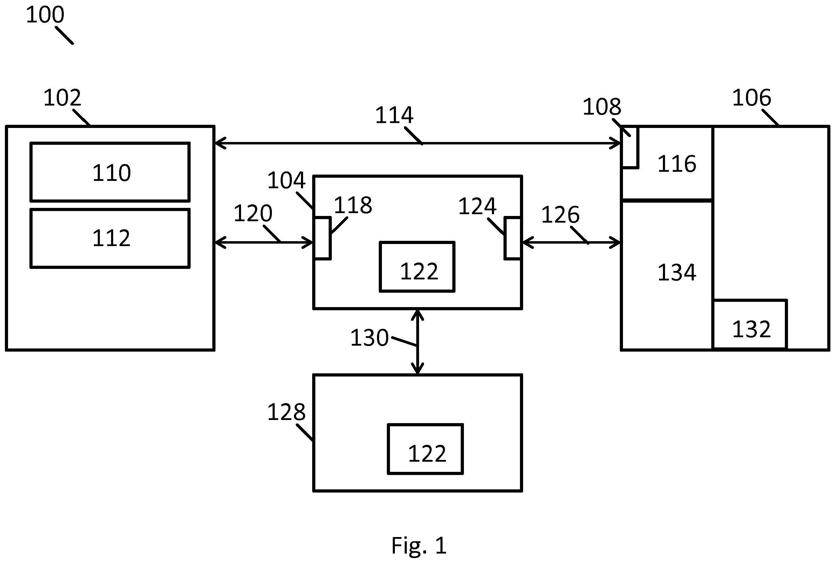

Im Folgenden wird anhand der beigefügten Zeichnungen ein bevorzugtes Ausführungsbeispiel der Erfindung beschrieben. Daraus ergeben sich weitere Details, bevorzugte Ausgestaltungen und Weiterbildungen der Erfindung. Im Einzelnen zeigt schematisch Fig. 1 ein System zur Programmierung eines Steuergeräts.

Fig. 1 zeigt eine Übersicht eines Systems 100 zur Programmierung eines Steuergeräts eines Fahrzeugs. Das System umfasst einen Server 102, eine Firewall 104, und/oder ein Steuergerät 106. Das Steuergerät 106 kann beispielsweise ein Zentralsteuergerät, ein Motorsteuergerät, ein Steuergerät zur Getriebeverriegelung, ein Steuergerät für eine Wegfahrsperre, ein Steuergerät zur Lenksäulenverriegelung, ein Steuergerät eines Antennenmoduls, und/oder ein Fernzugriffssteuergerät sein. Die Firewall 104 kann ein Rechner, ein Server, eine Netzwerkkomponente, und/oder ein Steuergerät sein, das innerhalb des Fahrzeugs oder außerhalb des Fahrzeugs angeordnet sein kann.

Der Server 102 kann ein Produktionsserver sein. Der Server 102 kann ein Rechner oder ein Server einer Reparaturwerkstätte sein. Der Server 102 kann innerhalb oder außerhalb eines Fahrzeugs angeordnet sein. Vorzugsweise ist der Server 102 außerhalb des Fahrzeugs angeordnet. Auf den Server 102 kann über ein öffentliches Netzwerk, z.B. das Internet, und/oder über ein lokales Netzwerk zugegriffen werden. Der Server 102 kann mit dem Steuergerät über eine Diagnoseschnittstelle 108 kommunizieren. Beispielsweise kann die Diagnoseschnittstelle eine JTAG Schnittstelle, d.h. eine Schnittstelle, die von der Joint Test Action Group (JTAG) spezifiziert wurde, sein. Beispielsweise kann die Diagnoseschnittstelle eine Schnittstelle nach dem IEEE-Standard 1149.1 sein. Der Server 102 kann ferner mit einer Firewall kommunizieren. Die Kommunikation mit der Firewall kann vorzugsweise über eine serielle Schnittstelle zwischen dem Server 102 und der Firewall 104 erfolgen. Alternativ kann auch jede andere Netzwerkschnittstelle, z.B. Ethernet oder Bus-basierte Netzwerkschnittstellen, verwendet werden.

Der Server 102 kann ein erstes Softwaremodul, z.B. ein Startprogramm 110 bzw. einen Bootloader des Steuergeräts 106, speichern. Der Server kann ferner eine verschlüsselte Fahrzeugsoftware 112 bzw. einen verschlüsselten Fahrzeugsoftwarestand speichern. Das Startprogramm 110 kann von dem Server 102 an die Diagnoseschnittstelle 108 des Steuergeräts 106 übertragen 114 werden. Bei erfolgreicher bzw. nichterfolgreicher Übertragung kann das Steuergerät 106 eine entsprechende Bestätigung an den Server übermitteln bzw. übertragen. Ist die Übertragung des Startprogramms 110 nicht erfolgreich, so kann der Server 102 eine erneute Übertragung durchführen. Das Steuergerät 106 kann das Startprogramm 110 in einem dafür vorgesehen Speicherbereich 116 des Steuergeräts 106 speichern.

Der Server 102 kann weiterhin mit einer Schnittstelle 118 der Firewall 104 kommunizieren 120. Über die Schnittstelle 118 der Firewall kann der Server Befehle an die Firewall übermitteln und/oder die verschlüsselte Fahrzeugsoftware 112 übertragen. Im Detail kann der Server 102 einen Befehl zum Sperren der Diagnoseschnittselle 108 des Steuergeräts 106 an die Firewall übertragen. Ferner kann der Server einen Befehl zum Schreiben eines Schlüssels 122 an die Firewall übermitteln. Der Server 102 kann jedoch keine Daten aus der Firewall auslesen. Insbesondere kann der Server 102 den Schlüssel 122 der Firewall nicht lesen. Das Schreiben von Daten und/oder das Übermitteln von Befehlen an die Firewall kann jedoch dem Server 102 durch die Firewall 104 erlaubt werden. Der Server 102 kann von der Firewall eine Bestätigung der jeweiligen Aktion empfangen. Beispielsweise kann der Server 102 bei erfolgreicher Ausführung eines Befehls durch die Firewall 104 eine entsprechende Bestätigung empfangen.

Die Firewall 104 kann über die Schnittstelle 118 Daten und/oder Befehle von dem Server 102 empfangen. Die Firewall 104 kann ferner über die Schnittstelle 124 Befehle und/oder Daten an eine weitere Schnittstelle des Steuergeräts 106 übermitteln 126. Die Firewall 104 kann einen Schlüssel 122 speichern. Mithilfe des Schlüssels 122 kann die verschlüsselte Fahrzeugsoftware 112 entschlüsselt werden. Der Schlüssel 122 kann in einem Schlüsselgenerator 128 erzeugt werden. Nach der Erzeugung kann der Schlüssel 122 an die Firewall 104 übertragen 130 werden bzw. von der Firewall 104 empfangen werden. Die Firewall 104 kann den Schlüssel 122 speichern. Vorzugsweise kann die Firewall den Schlüssel in einem geschützten Speicherbereich speichern, aus dem der Server 102 den Schlüssel nicht auslesen kann.

Die Firewall 104 kann einen Befehl zum Sperren der Diagnoseschnittstelle 108 über die Schnittstelle 118 von dem Server 102 empfangen. Die Firewall 104 kann den Befehl zum Sperren der Diagnoseschnittstelle 108 an das Steuergerät 106 weiterleiten. Vorzugsweise kann der Befehl über die weitere Schnittstelle des Steuergeräts 106 von der Firewall 104 übermittelt werden.

Die Firewall 104 kann weiterhin eine verschlüsselte Fahrzeugsoftware 112 von dem Server 102 über die Schnittstelle 118 empfangen. Diese verschlüsselt Fahrzeugsoftware kann von der Firewall 104 an das Steuergerät 106 weitergeleitet werden.

Die Firewall 104 kann einen Befehl zum Schreiben eines Schlüssels in das Steuergerät über die Schnittstelle 118 empfangen. Der Befehl kann beispielsweise eine oder mehrere Identifikationsnummern enthalten, die spezifizieren, für welches Steuergerät der Schlüssel programmiert werden soll. Beispielsweise kann der Befehl eine Fahrgestellnummer des Fahrzeugs und/oder eine Identifikationsnummer des Steuergeräts enthalten. Die Firewall kann anhand des Befehls zum Schreiben eines Schlüssels, den dazugehörigen Schlüssel identifizieren. Die Firewall 104 kann die Schnittstelle 118 mit dem Server 102 sperren, um ein Auslesen des Schlüssels 122 über die Schnittstelle 118 zu verhindern. Beispielsweise kann die Schnittstelle 118 nach dem Empfang des Befehls zum Schreiben des Schlüssels gesperrt werden.

Hat die Firewall 104 den Schlüssel 122 identifiziert, der in das Steuergerät 106 geschrieben werden soll, kann die Firewall 104 den Schlüssel 122 aus dem Speicher der Firewall 104 lesen. Im Anschluss kann die Firewall den Schlüssel 112 über die Schnittstelle 124 an das Steuergerät übertragen. Die Übertragung des Schlüssels kann verschlüsselt erfolgen. Die Schnittstelle 118 kann nach dem Übertragen des Schlüssels an das Steuergerät 106 durch die Firewall 104 freigegeben werden, so dass der Server 102 Befehle und/oder verschlüsselte Fahrzeugsoftware an die Firewall 104 übertragen kann.

Zusätzlich oder alternativ kann die Firewall 104 überprüfen, ob der Schlüssel für das Steuergerät 106 bestimmt ist. Dazu kann die Firewall 104 eine Anfrage zur Übermittelung einer Kennung bzw. Identifikationsnummer an das Steuergerät 106 übermitteln. Die Identifikationsnummer des Steuergeräts 106 kann mit einer Identifikationsnummer, die mit dem Schlüssel verknüpft ist, verglichen werden. Stimmt die Identifikationsnummer des Steuergeräts mit der Identifikationsnummer des Schlüssels überein, kann eine Übertragung des Schlüssels durch die Firewall 104 erfolgen. Dadurch kann die Sicherheit bei der Übertragung des Schlüssels an das Steuergerät 106 weiter erhöht werden.

Die Firewall 104 kann vor der Übertragung des Schlüssels eine Anfrage an das Steuergerät übermitteln, ob die Diagnoseschnittstelle gesperrt ist. Die Firewall kann eine Antwort auf diese Anfrage von dem Steuergerät über die Schnittstelle 124 empfangen. Die Firewall 104 kann den Schlüssel an das Steuergerät 106 nur übertragen, wenn das Steuergerät als Antwort meldet, dass die Diagnoseschnittstelle 108 des Steuergeräts gesperrt ist. Durch das Senden der Anfrage und das Auswerten der Antwort wird verhindert, dass der Server 102 über die Diagnoseschnittstelle 108 den Schlüssel 122 aus dem gesicherten Speicherbereich 132 des Steuergeräts 106 auslesen kann.

Das Steuergerät 106 kann einen Speicherbereich 116 zum Speichern eines Startprogramms umfassen. Der Speicherbereich 116 kann über die Schnittstelle 108 durch den Server 102 beschrieben und/oder gelesen werden. Das Steuergerät kann ferner einen Speicherbereich 134 zum Speichern der Fahrzeugsoftware bzw. Fahrzeugsoftwarestand und/oder einen Speicherbereich 132 zum Speichern eines oder mehrerer Schlüssel umfassen. Die Speicherbereiche 134 und/oder 132 können über eine weitere Schnittstelle des Steuergeräts geschrieben und/oder gelesen werden. Vorzugsweise ist der Speicherbereich 132 zum Speichern eines Schlüssels ein geschützter Speicherbereich, z.B. ein sogenanntes Secure Element. Für den Speicherbereich 134 kann ein Leseschutz installiert werden, der ein Lesen bzw. Auslesen der unverschlüsselten Fahrzeugsoftware verhindert. Beispielsweise können die Rechte für den Zugriff auf den Speicherbereich 134 so gesetzt werden, dass ein Lesen des Speicherbereichs 134 über die Schnittstellen des Steuergeräts 106 nicht mehr möglich ist.

Das Steuergerät kann ferner ein Softwaremodul 110, z.B. ein Startprogramm, über die Schnittstelle 108 empfangen. Das Softwaremodul 110 kann in dem Speicherbereich 116 gespeichert werden. Das Steuergerät 106 kann einen Befehl zum Sperren der Schnittstelle 108 über die weitere Schnittstelle empfangen. Vorzugsweise kann das Steuergerät 106 den Befehl zum Sperren der Schnittstelle 108 von der Firewall 104 empfangen. Das Steuergerät 106 kann den Befehl zum Sperren der Schnittstelle 108 ausführen. Durch die Ausführung des Befehls zum Sperren der Schnittstelle 108 kann das Steuergerät die Schnittstelle 108 sperren, so dass kein Zugriff über Schnittstelle 108 auf den Speicherbereich 116 und/oder die Speicherbereiche 132 und 134 möglich ist. Insbesondere können Register des Speicherbereichs 116 und/oder der Speicherbereiche 132 und 134 nicht mehr über die Schnittstelle 108 zu Diagnosezwecken gelesen werden. Im Detail kann der Befehl zum Sperren der Schnittstelle 108 im Startprogramm des Steuergeräts 106 ein Programm ausführen, das die Schnittstelle 108 des Steuergeräts sperrt. Durch das Sperren der Schnittstelle kann verhindert werden, dass der Schlüssel und/oder die unverschlüsselte Fahrzeugsoftware aus dem Speicher des Steuergeräts 106 ausgelesen werden kann.

Weiterhin kann das Steuergerät eine Anfrage, ob die Schnittstelle 108 gesperrt ist, empfangen. Die Anfrage kann von einer Firewall 104 von dem Steuergerät 106 empfangen werden. Das Steuergerät kann überprüfen, ob die Schnittstelle 108 gesperrt ist und die Anfrage der Firewall 104 entsprechend beantworten. Ist die Überprüfung, ob die Schnittstelle 108 gesperrt ist, erfolgreich, kann das Steuergerät einen oder mehrere Schlüssel von der Firewall 104 empfangen. Das Steuergerät 106 kann den oder die Schlüssel in dem Speicherbereich 132 speichern.

Zusätzlich oder alternativ kann das Steuergerät 106 eine Anfrage zur Übermittelung der Identifikationsnummer des Steuergeräts 106 empfangen. Die Anfrage zur Übermittelung des Identifikationsnummer des Steuergeräts 106 kann das Steuergerät 106 von der Firewall 104 empfangen. In Antwort auf die Anfrage zur Übermittelung der Identifikationsnummer des Steuergeräts 106 kann das Steuergerät 106 die Identifikationsnummer an die Firewall 104 übermitteln. Im Anschluss an die Anfrage zur Übermittelung der Identifikationsnummer kann das Steuergerät 106, wie oben beschrieben, einen oder mehrere Schlüssel empfangen und/oder speichern.

Das Steuergerät 106 kann eine verschlüsselte Fahrzeugsoftware bzw. Fahrzeugsoftwarestand empfangen über die weitere Schnittstelle empfangen. Das Startprogramm kann die empfangene verschlüsselte Fahrzeugsoftware programmieren. Dazu kann das Startprogramm den Schlüssel aus dem Speicherbereich 132 auslesen und die verschlüsselte Fahrzeugsoftware 112 entschlüsseln. Im Anschluss daran kann das Startprogramm die entschlüsselte Fahrzeugsoftware im Speichbereich 134 speichern. Nach erfolgtem Speichern kann das Steuergerät 106 eine Bestätigung des Programmierens der Fahrzeugsoftware an die Firewall 104 schicken.

Nach dem Programmieren der Fahrzeugsoftware kann das Steuergerät 106 einen Leseschutz empfangen. Der Leseschutz kann beispielsweise ein Befehl sein, mit dem die Zugriffrechts auf den Speicherbereich 134 gesetzt werden können. Die Zugriffrechte können dabei so gesetzt werden, dass ein Lesen des Speicherbereichs 134 über eine Schnittstelle des Steuergeräts 106 verhindert wird. Zusätzlich oder alternativ kann das Steuergerät 106 einen Leseschutz installieren. Beispielsweise kann der Leseschutz ein Softwaremodul sein, der den Zugriff auf den Speicherbereich 134 blockiert.

### Bezugszeichenliste

- 100: System
- 102: Server
- 104: Firewall
- 106: Steuergerät
- 108: Diagnoseschnittstelle
- 110: Startprogramm
- 112: verschlüsselte Fahrzeugsoftware
- 114: Übermitteln eines Startprogramms
- 116: Speicherbereich zum Speichern eines Startprogramms
- 118: Schnittstelle der Firewall mit dem Server
- 120: Kommunikation zwischen Server und Firewall
- 122: Schlüssel
- 124: Schnittstelle der Firewall mit dem Steuergerät
- 126: Kommunikation zwischen der Firewall und dem Steuergerät
- 128: Schlüsselgenerator
- 130: Kommunikation zwischen Schlüsselgenerator und Firewall
- 132: Speicherbereich eines Steuergeräts zum Speichern von Schlüsseln
- 134: Speicherbereich zum Speichern einer Fahrzeugsoftware

## Patentansprüche

1. Verfahren zum Programmieren eines Steuergeräts eines Fahrzeugs, das Verfahren umfassend:
Schreiben eines ersten Softwaremoduls (110) über eine erste Schnittstelle (108) in das Steuergerät (106);
Sperren der ersten Schnittstelle (108) des Steuergeräts (106);
Schreiben eines Schlüssels (122) über eine zweite Schnittstelle in einen gesicherten Speicherbereich (132) des Steuergeräts (106);
Schreiben einer verschlüsselten Fahrzeugsoftware (112) über die zweite Schnittstelle in das Steuergerät (106);
Entschlüsseln der verschlüsselten Fahrzeugsoftware (112) durch das erste Softwaremodul (110) unter Verwendung des geschrieben Schlüssels;
Speichern der entschlüsselten Fahrzeugsoftware in einen Speicherbereich (134) des Steuergeräts (106); und
Installieren eines Leseschutzes für den Speicherbereich (134) der entschlüsselten Fahrzeugsoftware.

2. Verfahren nach einem der vorhergehenden Ansprüche, wobei das Sperren der ersten Schnittstelle umfasst:
Übermitteln eines Befehls zum Sperren der ersten Schnittstelle des Steuergeräts (106) von einem Server (102) an das Steuergerät (106); und
Ausführen des Befehls zum Sperren der ersten Schnittstelle (108) auf dem Steuergerät (106).

3. Verfahren nach dem Anspruch 2, wobei der Befehl zum Sperren der ersten Schnittstelle (108) von dem Server (102) an eine Firewall (104) übermittelt wird, und
wobei der Befehl zum Sperren der ersten Schnittstelle von der Firewall (104) über die zweite Schnittstelle der Steuereinheit (106) an die Steuereinheit (106) übermittelt wird.

4. Verfahren nach einem der vorhergehenden Ansprüche, das Verfahren weiterhin umfassend:
Übermitteln eines Befehls zum Schreiben eines Schlüssels von dem Server (102) an die Firewall (104); und
Ausführen des Befehls zum Schreiben des Schlüssels in der Firewall (104), umfassend:
Sperren der Schnittstelle (118) zwischen der Firewall (104) und dem Server (102);
Lesen des Schlüssels aus einem Speicher der Firewall (104);
Übermitteln des Schlüssels über die zweite Schnittstelle des Steuergeräts (106) von der Firewall (104) an das Steuergerät (106); und
Freigeben der Schnittstelle (118) zwischen der Firewall (104) und dem Server (102).

5. Verfahren nach Anspruch 4, wobei das Übermitteln des Schlüssels ferner umfasst:
Übermitteln einer Anfrage an das Steuergerät (106), ob die erste Schnittstelle (108) gesperrt ist; und
Empfangen einer Antwort des Steuergeräts (106), ob die erste Schnittstelle (108) gesperrt ist,
wobei der Schlüssel über die zweite Schnittstelle des Steuergeräts (106) übermittelt wird, wenn die Antwort eine Bestätigung umfasst, dass die erste Schnittstelle (108) des Steuergeräts (106) gesperrt ist.

6. Verfahren nach einem der vorhergehenden Ansprüche, das Verfahren weiterhin umfassend:
Übermitteln der verschlüsselten Fahrzeugsoftware (112) von dem Server (102) an die Firewall (104);
Sperren der Schnittstelle (118) zwischen der Firewall (104) und dem Server (102); und
Übermitteln der verschlüsselten Fahrzeugsoftware (112) von der Firewall (104) an das Steuergerät (106).

7. Server (102) zum Programmieren eines Steuergeräts (106), wobei der Server (102) dazu ausgebildet ist:
ein erstes Softwaremodul (110) zu empfangen;
eine verschlüsselte Fahrzeugsoftware (112) zu empfangen;
das erste Softwaremodul (110) über eine erste Schnittstelle (108) an ein Steuergerät (106) zu übermitteln;
einen Befehl zum Sperren der ersten Schnittstelle (108) an das Steuergerät (106) zu übermitteln;
die verschlüsselte Fahrzeugsoftware (112) an eine Firewall (104) zu übermitteln; und
einen Befehl zum Schreiben eines Schlüssels (122) an die Firewall (104) zu übermitteln.

8. Firewall (104) zur Programmierung eines Steuerungsgeräts (106), wobei die Firewall (104) dazu ausgebildet ist:
einen Befehl zum Sperren einer ersten Schnittstelle (108) eines Steuergeräts (106) zu empfangen;
den Befehl zum Sperren der ersten Schnittstelle (108) an das Steuergerät (106) weiterzuleiten;
eine verschlüsselte Fahrzeugsoftware (112) zu empfangen;
einen Befehl zum Schreiben eines Schlüssels (122) in das Steuergerät (106) zu empfangen;
den Schlüssel (122) über eine zweite Schnittstelle in einen gesicherten Speicherbereich (132) des Steuergeräts (106) zu schreiben; und
die verschlüsselte Fahrzeugsoftware (112) über die zweite Schnittstelle an das Steuergerät (106) zu übermitteln.

9. Steuergerät (106), das Steuergerät (106) umfassend:
eine erste Schnittstelle (108) dazu ausgebildet ein erstes Softwaremodul (110) zu empfangen;
ein erstes Speicherelement (116) dazu ausgebildet das erste Softwaremodule (110) zu speichern;
ein zweites Speicherelement (134) dazu ausgebildet eine unverschlüsselte Fahrzeugsoftware zu speichern;
ein drittes Speicherelement (132) dazu ausgebildet einen Schlüssel (122) zu speichern; und
einen Prozessor umfassend Instruktionen, die, wenn ausgeführt auf dem Prozessor:
- das erste Softwaremodul (110) über die erste Schnittstelle empfangen;
- das erste Softwaremodul (110) in dem ersten Speicherelement (116) speichern;
- den Schlüssel (122) in dem dritten Speicherelement speichern;
- eine verschlüsselte Fahrzeugsoftware (112) empfangen;
- die verschlüsselte Fahrzeugsoftware (112) durch das erste Softwaremodul (110) unter Verwendung des gespeicherten Schlüssel entschlüsseln;
- die entschlüsselte Fahrzeugsoftware in dem zweiten Speicherbereich (134) speichern; und
- einen Leseschutz für den zweiten Speicherbereich (134) installieren.

10. System (100) zum Programmieren eines Steuergeräts (106), das System (100) umfassend:
einen Server (102) nach Anspruch 7;
eine Firewall (104) nach Anspruch 8; und
das Steuergerät (106) nach Anspruch 9.

## Claims

1. A method for programming a control unit of a vehicle, the method comprising the following steps:
writing a first software module (110) via a first interface (108) into the control unit (106);
blocking the first interface (100) of the control unit (106);
writing a key (122) via a second interface into a secured memory area of the control unit (106);
writing encrypted vehicle software (112) via the second interface into the control unit (106);
decrypting the encrypted vehicle software (112) by the first software module (110) using the written key;
storing the decrypted vehicle software in a memory area (134) of the control unit (106); and
installing read protection for the memory area (134) of the decrypted vehicle software.

2. A method according to the preceding claim, wherein the blocking of the first interface comprises the following steps:
transmitting a command for blocking the first interface of the control unit (106) from a server (102) to the control unit (106); and
executing the command for blocking the first interface (108) on the control unit (106).

3. A method according to claim 2, wherein the command for blocking the first interface (108) is transmitted from the server (102) to a firewall (104), and
wherein the command for blocking the first interface is transmitted from the firewall (104), via the second interface of the control unit (106), to the control unit (106).

4. A method according to any one of the preceding claims, the method furthermore comprising the following steps:
transmitting a command for writing a key from the server (102) to the firewall (104); and
executing the command for writing the key in the firewall (104),
comprising:
blocking the interface (118) between the firewall (104) and the server (102);
reading the key out of a memory of the firewall (104);
transmitting the key via the second interface of the control unit (106) from the firewall (104) to the control unit (106); and
releasing the interface (118) between the firewall (104) and the server (102).

5. A method according to claim 4, wherein the transmission of the key further comprises:
transmitting a query to the control unit (106) as to whether the first interface (108) is blocked; and
receiving a response of the control unit (106) as to whether the first interface (108) is blocked,
wherein the key is transmitted via the second interface of the control unit (106) if the response comprises a confirmation that the first interface (108) of the control unit (106) is blocked.

6. A method according to any one of the preceding claims, further comprising the following steps:
transmitting the encrypted vehicle software (112) from the server (102) to the firewall (104);
blocking the interface (118) between the firewall (104) and the server (102); and
transmitting the encrypted vehicle software (112) from the firewall (104) to the control unit (106).

7. A server (102) for programming a control unit (106), wherein the server (102) is configured to:
receive a first software module (110);
receive encrypted vehicle software (112);
transmit the first software module (110) via a first interface (108) to a control unit (106);
transmit a command for blocking the first interface (108) to the control unit (106);
transmit the encrypted vehicle software (112) to the firewall (104); and
transmit a command for writing a key (122) to the firewall (104).

8. A firewall (104) for programming a control unit (106), wherein the firewall (104) is configured to:
receive a command for blocking a first interface (108) of a control unit (106);
forward the command for blocking the first interface (108) to the control unit (106);
receive encrypted vehicle software (112);
receive a command for writing a key (122) into the control unit (106);
write the key (122) via a second interface into a secured memory area (132) of the control unit (106); and
transmit the encrypted vehicle software (112) via the second interface to the control unit (106).

9. A control unit (106), the control unit (106) comprising:
a first interface (108) configured to receive a first software module (110);
a first memory element (116) configured to store the first software module (110);
a second memory element (134) configured to store decrypted vehicle software;
a third memory element (132) configured to store a key (122); and
a processor, comprising instructions which, when executed on the processor:
- receive the first software module (110) via the first interface;
- store the first software module (110) in the first memory element (116);
- store the key (122) in the third memory element;
- receive encrypted vehicle software (112);
- decrypt the encrypted vehicle software (112) by the first software module (110) with use of the stored key;
- store the decrypted vehicle software in the second memory area (134); and
- install read protection for the second memory area (134).

10. A system (100) for programming a control unit (106), the system (100) comprising:
a server (102) according to claim 7;
a firewall (104) according to claim 8; and
the control unit (106) according to claim 9.

## Revendications

1. Procédé de programmation d'un appareil de commande d'un véhicule comprenant des étapes consistant à :
inscrire un premier module de logiciel (110) par l'intermédiaire d'une première interface (108) dans l'appareil de commande (106),
bloquer la première interface (108) de l'appareil de commande (106),
inscrire une clé (102) par l'intermédiaire d'une seconde interface dans une zone de mémoire sécurisée (102) de l'appareil de commande (106),
inscrire un logiciel du véhicule verrouillé (112) par l'intermédiaire de la seconde interface dans l'appareil de commande (106),
déverrouiller le logiciel du véhicule verrouillé (112) par le premier module de logiciel (110) en utilisant la clé inscrite,
stocker le logiciel du véhicule déverrouillé dans une zone de mémoire (134) de l'appareil de commande (106), et
installer une protection en lecture de la zone de mémoire (134) du logiciel du véhicule déverrouillé.

2. Procédé conforme à la revendication précédente,
selon lequel le blocage de la première interface comprend des étapes consistant à :
transmettre à l'appareil de commande (106) un ordre de blocage de la première interface de l'appareil de commande (106) par un serveur (102), et
exécuter l'ordre de blocage de la première interface (108) sur l'appareil de commande (106).

3. Procédé conforme à la revendication 2,
selon lequel l'ordre de blocage de la première interface (108) est transmis par le serveur (102) à un pare-feu (104), et
l'ordre de blocage de la première interface est transmis à l'unité de commande (106) par le pare-feu (104) par l'intermédiaire de la seconde interface de l'appareil de commande (106).

4. Procédé conforme à l'une des revendications précédentes, comprenant en outre des étapes consistant à :
transmettre par le serveur (102) un ordre d'inscription d'une clé au pare-feu (104), et
exécute l'ordre d'inscription de la clé dans le pare-feu (104) par des étapes consistant à :
bloquer l'interface (118) entre le pare-feu (104) et le serveur (102),
lire la clé à partir d'une mémoire du pare-feu (104),
transmettre par le pare-feu (104) la clé à l'appareil de commande (106) par l'intermédiaire de la seconde interface de l'appareil de commande (106), et
libérer l'interface (118) entre le pare-feu (104) et le serveur (102).

5. Procédé conforme à la revendication 4,
selon lequel la transmission de la clé comporte en outre des étapes consistant à :
demander à l'appareil de commande (106) si la première interface (108) est bloquée, et
recevoir une réponse de l'appareil de commande (106) indiquant si la première interface (108) est bloquée,
la clé étant transmise par la seconde interface de l'appareil de commande (106) lorsque la réponse comprend la confirmation que la première interface (108) de l'appareil de commande (106) est bloquée.

6. Procédé conforme à l'une des revendications précédentes, comprenant en outre des étapes consistant à :
transmettre au pare-feu (104) le logiciel du véhicule verrouillé (112) par le serveur (102),
bloquer l'interface (118) entre le pare-feu (104) et le serveur (102), et
transmettre au pare-feu (104) le logiciel du véhicule verrouillé (112) à l'appareil de commande (106).

7. Serveur (102) permettant de programmer un appareil de commande (106), ce serveur (102) étant réalisé pour :
recevoir un premier module de logiciel (110),
recevoir un logiciel du véhicule (112) verrouillé,
transmettre le premier module de logiciel (110) à un appareil de commande (106) par une première interface (108),
transmettre à l'appareil de commande (106) un ordre de blocage de la première interface (108),
transmettre le logiciel du véhicule verrouillé (112) à un pare-feu (104, et
transmettre un ordre d'inscription d'une clé (122) au pare-feu (104).

8. Pare-feu (104) permettant de programmer un appareil de commande (106), le pare-feu étant réalisé pour :
recevoir un ordre de blocage d'une première interface (108) d'un appareil de commande (106),
retransmettre l'ordre de blocage de la première interface (108) à l'appareil de commande (106),
recevoir un logiciel du véhicule verrouillé (112),
recevoir un ordre d'inscription d'une clé (122) dans l'appareil de commande (106),
inscrire la clé (122) par l'intermédiaire d'une seconde interface dans une zone de mémoire sécurisée (132) de l'appareil de commande (106), et
transmettre le logiciel du véhicule verrouillé (112) à l'appareil de commande (106) par l'intermédiaire de la seconde interface.

9. Appareil de commande (106) comprenant :
une première interface (108) qui est réalisée pour recevoir un premier module de logiciel (110),
un premier élément de mémoire (116) réalisé pour stocker le premier module de logiciel (110),
un second élément de mémoire (134) réalisé pour stocker un logiciel du véhicule non verrouillé,
un troisième élément de mémoire (132) réalisé pour stocker une clé (122) et un processeur comprenant des instructions qui, lorsqu'elles sont exécutées sur ce processeur permettant :
- de recevoir le premier module de logiciel (110) par l'intermédiaire de la première interface,
- de stocker le premier module de logiciel (110) dans le premier élément de mémoire (116),
- de stocker la clé (122) dans le troisième élément de mémoire,
- de recevoir un logiciel du véhicule verrouillé (112),
- de déverrouiller le logiciel du véhicule verrouillé (112) par le premier module de logiciel (110) en utilisant la clé stockée,
- de stocker le logiciel du véhicule déverrouillé dans la seconde zone de mémoire (134), et
- d'installer une protection en lecture pour le second domaine de mémoire (134).

10. Système (100) de programmation d'un appareil de commande (106) comprenant :
un serveur (102) conforme à la revendication 7,
un pare-feu (104) conforme à la revendication 8, et
un appareil de commande (106) conforme à la revendication 9.
